(11) **EP 0 990 939 B2**

(12)

# NOUVEAU FASCICULE DE BREVET EUROPEEN
Après la procédure d'opposition

(45) Date de publication et mention de la décision concernant l'opposition:
**14.03.2018   Bulletin 2018/11**

(45) Mention de la délivrance du brevet:
**23.01.2008   Bulletin 2008/04**

(21) Numéro de dépôt: **99402280.4**

(22) Date de dépôt: **17.09.1999**

(51) Int Cl.:
***G02C 7/06*** *(2006.01)*    ***G02C 7/02*** *(2006.01)*

(54) **Lentilles ophtalmiques toriques**

Torische ophthalmische Linsen

Toric ophthalmic lenses

(84) Etats contractants désignés:
**AT BE CH CY DE DK ES FI FR GB GR IE IT LI LU MC NL PT SE**

(30) Priorité:  **28.09.1998   FR 9812109**

(43) Date de publication de la demande:
**05.04.2000   Bulletin 2000/14**

(73) Titulaire: **Essilor International**
**94220 Charenton-le-Pont (FR)**

(72) Inventeurs:
• **Baudart, Thierry**
**94340 Joinville le Pont (FR)**

• **Le Saux, Gilles**
**75010 Paris (FR)**

(74) Mandataire: **Desrousseaux, Grégoire Marie**
**August & Debouzy avocats**
**6-8 avenue de Messine**
**75008 Paris (FR)**

(56) Documents cités:
**EP-A- 0 724 179      EP-A- 0 857 993**
**EP-A2- 0 857 993      WO-A1-98/12590**
**WO-A1-99/13374      DE-A1- 4 210 008**
**DE-A1- 4 337 369      US-A- 5 270 745**
**US-A- 5 444 503**

**Description**

La présente invention a pour objet un procédé de détermination et d'obtention d'une lentille ophtalmique unique adaptée à un porteur auquel un astigmatisme a été prescrit; on appelle aussi de telles lentilles lentilles ophtalmiques toriques; elles s'opposent aux lentilles ophtalmiques dites sphériques, qui sont destinées à des porteurs sans prescription d'astigmatisme. Le procède peut être appliqué indifféremment pour une lentille unifocale ou multifocale.

Les lentilles ophtalmiques multifocales sont bien connues; on peut parmi ces lentilles multifocales distinguer des lentilles appelées lentilles progressives, et des lentilles plus spécifiquement dédiées à la vision de près.

Les lentilles multifocales posent un problème particulier pour le porteur astigmate. L'astigmatisme fourni au porteur est la résultante de trois composantes:

- le cylindre local de la surface progressive, caractérisé par son amplitude (ou module) et son axe;
- le cylindre prescrit et son axe;
- l'astigmatisme oblique.

Actuellement, pour corriger un porteur astigmate, on réalise une lentille dont la face avant est optimisée dans le cas d'une prescription sphérique, et dont la face arrière est un simple tore. Ainsi, on ne tient pas compte des dégradations introduites par le tore; on peut tout au mieux jouer sur l'astigmatisme oblique en ajustant la base de la face avant. Pour des raisons économiques, on ne peut multiplier le nombre de bases déja existantes.

Les lentilles ophtalmiques multifocales progressives sont maintenant bien connues. Elles sont utilisées pour corriger la presbytie et permettent au porteur des lunettes d'observer des objets dans une large gamme de distances, sans avoir à retirer ses lunettes. De telles lentilles comportent typiquement une zone de vision de loin, située dans le haut de la lentille, une zone de vision de près, située dans le bas de la lentille, une zone intermédiaire reliant la zone de vision de près et la zone de vision de loin, ainsi qu'une méridienne principale de progression traversant ces trois zones.

Le document FR-A-2 699 294 décrit dans son préambule les différents éléments d'une telle lentille ophtalmique multifocale progressive, ainsi que les travaux menés par la demanderesse pour améliorer le confort des porteurs de telles lentilles. On se référera à ce document pour plus de précisions sur ces différents points.

La demanderesse a aussi proposé, par exemple dans les brevets US-A-5 270 745 ou US-A-5 272 495 de faire varier la méridienne, et notamment son décentrement en un point de contrôle de la vision de près, en fonction de l'addition et de l'amétropie.

La demanderesse a encore proposé, pour mieux satisfaire les besoins visuels des presbytes et améliorer le confort des lentilles multifocales progressives, diverses améliorations (FR-A-2 683 642, FR-A-2 699 294, FR-A-2 704 327).

Il existe aussi des lentilles dédiées plus spécifiquement à la vision de près; ces lentilles ne présentent pas une zone de vision de loin avec un point de référence défini comme dans les lentilles progressives classiques. Ces lentilles sont prescrites en fonction de la puissance nécessaire au porteur en vision de près, indépendamment de la puissance en vision de loin. Une telle lentille est décrite dans un article de l'Opticien Lunetier d'avril 1988, et est commercialisée par la demanderesse sous la marque Essilor Delta; cette lentille est simple à utiliser et aussi facile à supporter qu'une lentille progressive, et est attirante pour la population des presbytes non équipée de lentilles progressives. Cette lentille est aussi décrite dans la demande de brevet FR-A-2 588 973. Elle présente une partie centrale qui équivaut au verre unifocal que l'on utiliserait normalement pour corriger la presbytie, de sorte à assurer une vision de près satisfaisante. Elle présente en outre une légère décroissance de puissance dans la partie supérieure, qui assure au porteur une vision nette aussi au delà du champ habituel de vision de près. Enfin, la lentille présente un point à une valeur de puissance égale à la puissance nominale de vision de près, une zone de puissance plus élevée dans la partie inférieure du verre, et une zone de puissance plus faible dans la partie supérieure du verre.

Habituellement, les lentilles multifocales, qu'elles soient progressives ou dédiées à la vision de près, comportent une face multifocale asphérique, par exemple la face opposée au porteur des lunettes, et une face sphérique ou torique, dite face de prescription. Cette face sphérique ou torique permet d'adapter la lentille à l'amétropie de l'utilisateur, de sorte qu'une lentille multifocale n'est généralement définie que par sa surface asphérique. Comme il est bien connu, une telle surface asphérique est généralement définie par l'altitude de tous ses points. On utilise aussi les paramètres constitués par les courbures minimales et maximales en chaque point, ou plus couramment leur demi-somme et leur différence. Cette demi-somme et cette différence multipliées par un facteur n-1, n étant l'indice de réfraction du matériau de la lentille, sont appelées sphère moyenne et cylindre.

Pour des lentilles multifocales progressives, on définit ainsi par le choix d'un couple (addition, base) un ensemble ou jeu de faces multifocales asphériques. Habituellement, on peut ainsi définir 5 valeurs de bases et 12 valeurs d'additions, soient soixante faces multifocales. Dans chacune des bases, on réalise une optimisation pour une puissance donnée, i. e. pour une face de prescription sphérique d'une courbure donnée.

L'utilisation avec l'une de ces faces multifocales d'une face de prescription sphérique ou torique d'une puissance voisine de la face de prescription considérée pour l'optimisation permet de couvrir l'ensemble des besoins des porteurs de lentilles multifocales progressives. Cette méthode connue permet, à partir de lentilles semi-finies, dont seule la face multifocale est conformée, de préparer des lentilles adaptées à chaque porteur, par simple usinage d'une face de prescription sphérique ou torique.

Une méthode analogue est utilisée pour l'optimisation et la prescription de lentilles dédiées à la vision de près.

Cette méthode présente l'inconvénient de n'être qu'une approximation; en conséquence, les résultats obtenus avec une face de prescription différente de celle utilisée pour l'optimisation sont moins bons que ceux correspondant à la face de prescription utilisée pour l'optimisation.

Le brevet US-A-5 444 503 décrit une lentille présentant une surface multifocale et une surface de prescription. Par rapport à l'art antérieur, qui suggère de définir la surface de prescription pour obtenir une puissance donnée au point de référence de vision de loin, il est proposé dans ce document de définir la surface de prescription de la lentille en fonction de la puissance requise par le porteur dans une pluralité de surfaces élémentaires. Pour cela, ce document propose de calculer les aberrations sur toute la surface, et de faire varier une surface continue paramétrée, par exemple une surface définie par des splines, à l'aide d'algorithmes mathématiques d'optimisation connus. Dans la pratique, au delà de cette affirmation de principe, ce document propose d'utiliser pour optimiser la surface de prescription la distance à la cornée dans une surface élémentaire, la distance objet dans une surface élémentaire, l'inclinaison de la lentille dans la monture, la forme de la monture, et la courbure de la lentille. Ce document est muet quant au calcul effectif de la surface de prescription. Selon ce document, cette solution permettrait de pallier les défauts provenant du remplacement de la face arrière ayant servi à l'optimisation par une face arrière voisine.

Cette solution présente l'inconvénient de compliquer la fabrication des lentilles: elle implique de déterminer et usiner une face arrière asphérique. Dans ce cas, on doit optimiser et usiner deux surfaces complexes. La méthode proposée ne semble pas fondée sur des données physiologiques.

La demande de brevet WO-A-9613748 propose encore d'utiliser pour des lentilles multifocales une surface de prescription atorique, de sorte à limiter les défauts par rapport à la surface de prescription utilisée pour l'optimisation. Ce document propose des surfaces de prescription dont les sections principales sont des cercles de rayon défini par une équation donnée, les paramètres de l'équation dépendant de la sphère et du cylindre du porteur. La solution proposée dans ce document présente les mêmes inconvénients que ceux décrits en référence à US-A-5 444 503.

La demande de brevet WO-A-9719382 décrit une lentille ophtalmique progressive présentant une face avant sphérique ou à symétrie de révolution, et une face arrière obtenue en combinant une surface progressive ayant une addition et une surface torique présentant un tore adapté à l'astigmatisme du porteur. La formule de combinaison de ces deux surfaces est précisée dans le document, et donne l'altitude d'un point en fonction de ses coordonnées dans un repère orthonormé, de la sphère moyenne de la surface progressive en ce point, et des courbures de la surface progressive dans les directions du repère orthonormé.

La combinaison algébrique des deux surfaces dans ce document, grâce à la formule de combinaison fournie, ne donne pas des résultats optiques satisfaisants. Cette méthode oblige le fabricant à recambrer la surface avant des lentilles pour avoir une qualité optique satisfaisante, dégradant ainsi l'esthétique de la lentille.

Les brevets de l'art antérieur sont simplistes ou peu explicites quant aux techniques de calcul. Ces techniques ne semblent pas fondées sur des données physiologiques, et n'utilisent pas de tracé de rayons.

L'invention propose un procédé de détermination et d'obtention d'une lentille torique, fondé sur une loi physiologique, permettant de tenir compte de la torsion de l'oeil pour une direction du regard donnée. Pour chaque direction du regard, on fait en sorte que la puissance et l'astigmatisme en valeur comme en direction soient le plus conforme possible à la prescription dans le repère lié à l'oeil. Le calcul de l'astigmatisme dans ce repère permet de tenir compte de l'effet de torsion de l'oeil, lorsque le porteur regarde dans une direction excentrée. Le procédé utilise un tracé de rayons, et donc une méthode optique.

L'invention propose un procédé tel que celui défini dans la revendication 1 permettant de définir une lentille adaptée pour une prescription torique, avec pour cible le comportement d'une lentille sphérique; on appelle dans ce contexte lentille sphérique une lentille adaptée à être prescrite à un porteur sans astigmatisme; i. e. ne présentant pas de cylindre global.

Elle permet ainsi d'obtenir des lentilles adaptées à des porteurs astigmates, qui présentent des caractéristiques optiques meilleures que celles de l'art antérieur.

Le procédé général proposé applicable à tout type de lentille permet de pallier les inconvénients dus au tore dans une prescription torique classique, et de redonner au porteur une perception équivalente à celle d'une prescription sphérique.

L'invention propose aussi de calculer et d'obtenir une lentille unique pour chaque prescription. A l'aide d'autres paramètres tels que la forme de la monture, la distance cornée verre, l'angle pantoscopique, on peut calculer un verre pour chaque porteur.

Des modes de réalisation additionels sont définis dans les revendications dépendantes.

D'autres avantages et caractéristiques de l'invention apparaîtront à la lecture de la description qui suit de modes de réalisation de l'invention, donnés à titre d'exemple et en référence aux dessins qui montrent:

- figure 1, un schéma d'un système optique oeil et lentille;
- figures 2 et 3, des schémas définissant un repère lié à l'oeil;
- figures 4 à 7, des représentations des caractéristiques optiques d'une lentille de l'art antérieur;
- figures 8 à 10, des représentations des caractéristiques optiques d'une lentille de référence;
- figures 11 à 14, des représentations des caractéristiques optiques d'une lentille dont la face avant est optimisée selon l'invention, et pour une face arrière sensiblement différente de celle de la lentille de l'art antérieur;
- figures 15 à 17, des représentations des caractéristiques surfaciques de la face avant d'une lentille optimisée selon l'invention;
- figures 18 à 20, des représentations des caractéristiques surfaciques de la face arrière d'une lentille de départ, dans un second exemple ;
- figures 21 à 23, des représentations des caractéristiques optiques d'une lentille de référence;
- figures 24 à 27, des représentations des caractéristiques optiques d'une lentille dont la face arrière est optimisée ;
- figures 28 à 30, des représentations des caractéristiques surfaciques de la face arrière de la lentille optimisée ;
- figures 31 à 34, des représentations des caractéristiques optiques d'une lentille analogue de l'art antérieur;
- figures 35 à 38, des représentations des caractéristiques optiques d'une lentille unifocale dont la face avant est optimisée selon un troisième exemple de réalisation de l'invention;
- figures 39 à 41, des représentations des caractéristiques surfaciques de la face avant de la lentille unifocale optimisée;
- figures 42 à 45, des représentations des caractéristiques optiques d'une lentille analogue de l'art antérieur;

De façon connue en soi, en tout point d'une surface asphérique, on définit une sphère moyenne D donnée par la formule:

$$D = \frac{n-1}{2}\left(\frac{1}{R_1} + \frac{1}{R_2}\right)$$

où $R_1$ et $R_2$ sont les rayons de courbure maximal et minimal exprimés en mètres, et n l'indice du matériau constituant la lentille.

On définit aussi un cylindre C, donné par la formule:

$$C = (n-1)\left|\frac{1}{R_1} - \frac{1}{R_2}\right|$$

On définit pour une lentille donnée, et par exemple pour une lentille multifocale, les grandeurs optiques correspondantes, à savoir une puissance et un astigmatisme; la puissance est définie comme expliqué ci-dessous. L'astigmatisme est calculé par exemple comme expliqué dans B. Bourdoncle et autres, Ray tracing through progressive ophthalmic lenses, 1990 International Lens Design Conférence, D.T. Moore ed., Proc. Soc. Photo. Opt. Instrum. Eng. On obtient ainsi des définitions possibles de la puissance optique et de l'astigmatisme de la lentille, dans les conditions du porté. On entend par conditions du porté la position de la lentille par rapport à l'oeil du porteur moyen, définie notamment par l'angle pantoscopique, qui est d'environ 12°, par la distance verre-oeil, l'écart pupillaire.

On peut non seulement utiliser ces définitions mais aussi déterminer la puissance et l'astigmatisme à partir des coefficients de la décomposition de la surface d'onde. On obtient encore des définitions représentatives des conditions du porté.

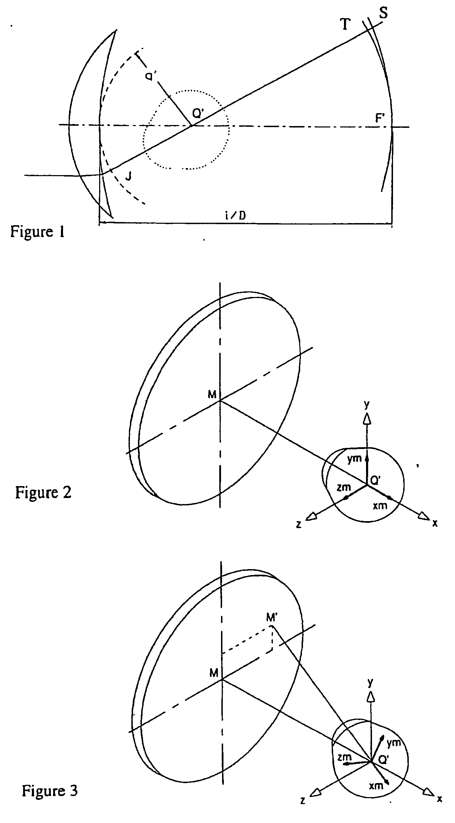

La figure 1 montre un schéma d'un système optique oeil et lentille, et montre les définitions utilisées dans la suite de la description. On appelle Q' le centre de rotation de l'oeil, et on définit une sphère des sommets, de centre Q', et de rayon q', qui est tangente à la face arrière de la lentille en un point de l'axe horizontal. A titre d'exemple, une valeur du rayon q' de 27 mm correspond à une valeur courante et fournit des résultats satisfaisants lors du porté des lentilles.

Une direction donnée du regard correspond à un point J de la sphère des sommets, et peut aussi être repérée, en coordonnées sphériques, par deux angles $\alpha$ et $\beta$. L'angle $\alpha$ est l'angle formé entre la droite Q'J et le plan horizontal passant par le point Q', tandis que l'angle $\beta$ est l'angle formé entre la droite Q'J et le plan vertical passant par le point Q'. Une direction donnée du regard correspond donc à un point J de la sphère des sommets ou à un couple $(\alpha, \beta)$. L'image d'un point de l'espace objet, dans une direction du regard, et à une distance objet donnée, se forme entre deux points S et T correspondant à des distances focales minimale et maximale, qui seraient des distances focales sagittale et tangentielle dans le cas de surfaces de révolution. Sur l'axe optique, l'image d'un point de l'espace objet à l'infini se forme au point F'. La distance D est la focale du système oeil-lentille.

On appelle ergorama une fonction associant à chaque direction du regard la distance du point objet habituellement regardée; pour plus de détails sur une définition possible d'un ergorama, on pourra consulter FR-A-2 753 805. Ce document décrit un ergorama, sa définition et son procédé de modélisation. Un ergorama particulier consiste à ne prendre que des points à l'infini. Pour le procédé de l'invention, on peut considérer des points à l'infini ou non.

La figure 2 montre la position de l'oeil et du repère lié à l'oeil, dans la direction de regard principale, $\alpha = \beta = 0$, dite direction primaire du regard. La figure 3 montre la position de l'oeil et du repère qui y est lié dans une direction $(\alpha, \beta)$.

On note $\{x, y, z\}$ un repère fixe, dont le centre est Q'; l'axe x passe par le centre de la lentille, l'axe y est la verticale, et l'axe z l'horizontale. On note $\{x_m, y_m, z_m\}$ un repère lié à l'oeil, dont le centre est Q', dont l'axe $x_m$ est donné par la direction du regard, et qui coïncide avec le repère $\{x, y, z\}$ pour la direction primaire du regard. La loi de Listing donne les relations entre les repères $\{x, y, z\}$ et $\{x_m, y_m, z_m\}$, voir Legrand, Optique Physiologique, tome 1, Edition de la Revue d'Optique, Paris 1969.

On peut ainsi définir dans le repère lié à l'oeil et dans une direction donnée du regard, l'orientation et la valeur de l'astigmatisme ainsi que la valeur de la puissance, à partir de la décomposition de la surface d'onde qui rentre dans la pupille de l'oeil, supposée de rayon unité par simplification; celles ci correspondent à la valeur et l'orientation de l'astigmatisme ainsi qu'à la puissance effectivement perçues par le porteur. La surface d'onde qui entre dans la pupille de l'oeil dans chaque direction du regard peut être obtenue de façon connue en soi par tracé de rayons.

De façon connue en soi, une surface d'onde peut être décomposée sur une pupille de rayon unité par des polynômes de Zernike; dans le domaine ophtalmique on se limite généralement aux premiers termes de cette représentation. Une surface d'onde peut être approximée par une combinaison linéaire de polynômes, du type:

$$z(x_m, y_m, z_m) = \sum_i a_i p_i$$

où les $P_i$ sont les polynômes de Zernike, et les $a_i$ des coefficients réels. Pour chaque direction du regard, la surface d'onde qui rentre dans la pupille de l'oeil peut donc s'exprimer par les relations suivantes, où les pi sont les pomynômes de Zernike ramenés dans le repère lié à l'oeil:

$$p_3 = 2x_m y_m$$

$$p_4 = 2(x_m^2 + y_m^2) - 1$$

$$p_5 = x_m^2 - y_m^2$$

$$z(x_m, y_m, z_m) = \sum_i a_i p_i$$

L'invention propose d'effectuer cette décomposition dans un repère lié à l'oeil, par exemple le repère $\{x_m, y_m, z_m\}$ évoqué plus haut. Dans ce cas, les coefficients $a_3$, $a_4$ et $a_5$ sont représentatifs de la puissance moyenne et de l'astigmatisme, par les relations suivantes:

- le terme variable de la puissance moyenne est alors donné par $4a_4$,

- le module de l'astigmatisme est donné par $4\sqrt{a_3^2 + a_5^2}$, et

- l'axe de l'astigmatisme est déduit du rapport $a_3/a_5$.

On pourrait aussi utiliser d'autres définitions de la puissance ou de l'astigmatisme dans un repère lié à l'oeil, tenant compte des autres coefficients de la décomposition, mais celles ci présentent l'avantage d'être simples, et de pouvoir être calculées facilement à l'aide d'un programme de tracé de rayons, pour une lentille donnée.

L'invention propose d'utiliser cette modélisation des surfaces d'ondes dans chaque direction du regard pour la définition d'une lentille ophtalmique, en prenant en compte les données physiologiques du porteur.

Pour cela, on considère la prescription nécessaire au porteur en vision de loin, en puissance et en astigmatisme, qui peut être transformée en des coefficients $(A_3, A_4, A_5)$. Ces coefficients sont descriptifs de la surface d'onde qu'il faudrait générer pour parfaitement corriger le porteur en vision de loin. Exprimé dans le repère de Listing lié à l'oeil, le triplet de ces coefficients reste constant pour toutes les directions du regard.

On considère ensuite une lentille de référence, qui est une lentille sphérique, i. e. sans tore ou astigmatisme; on peut choisir comme lentille de référence une lentille présentant une addition et une puissance moyenne identiques à celles qui ont été prescrites; une solution dans le cas d'une lentille multifocale progressive consiste à considérer une lentille sphérique de la demanderesse, du type décrit dans les demandes de brevet FR-A-2 683 642, FR-A-2 683 643, et FR-A-2 699 294, et vendue sous la marque Varilux.

A cette lentille de référence correspond dans chaque direction du regard une surface d'onde, pour un espace objet donné, et pour des conditions de montages données; on peut ainsi en déduire un triplet $(a_3, a_4, a_5)$ pour chacune des directions du regard. On peut considérer comme espace objet donné un ergorama du type mentionné plus haut, ou un espace objet quelconque. Pour le montage, on peut considérer des conditions de montage classiques, telles que celles décrites dans la demande de brevet précitée de la demanderesse; on pourrait aussi considérer les conditions de montage d'un porteur donné.

On peut à partir de ces différents triplets $(a_3, a_4, a_5)$ et de la prescription $(A_3, A_4, A_5)$ définir pour chaque direction du regard une surface d'onde cible, susceptible d'être utilisée pour une optimisation d'une lentille. Dans chaque direction du regard, la surface d'onde cible est représentée par un triplet $(a'_3, a'_4, a'_5)$, avec

$$4a'_4 = 4a_4 \qquad\qquad (1)$$

$$4\sqrt{(a'_3 - A_3)^2 + (a'_5 - A_5)^2} = 4\sqrt{a_3^2 + a_5^2} \qquad\qquad (2)$$

La première relation (1) exprime le fait que l'on souhaite conserver le comportement en puissance du verre de référence.

La deuxième relation représente l'astigmatisme "résiduel", qui correspond à l'écart entre l'astigmatisme créé par la lentille et l'astigmatisme prescrit au porteur; elle traduit le fait que la présence du tore ne doit pas dégrader les performances de la lentille de référence. On notera que l'invention est ici décrite sous l'hypothèse que l'astigmatisme prescrit en vision de loin est en fait l'astigmatisme à appliquer dans chaque direction du regard, dans le repère lié à l'oeil. On pourrait aussi bien adapter les valeurs de l'astigmatisme, et changer le triplet $(A_3, A_4, A_5)$ en fonction des directions du regard.

La contrainte imposée sur l'astigmatisme résiduel est qu'il soit égal à l'astigmatisme du verre de référence; dans le cas idéal, l'astigmatisme résiduel devrait être nul dans chaque direction du regard. Il s'avère que cette contrainte idéale ne permet pas toujours d'obtenir une solution physique; la contrainte imposée par la relation (2) est moins rigoureuse que la contrainte idéale, et permet d'obtenir une solution. Le choix de la lentille de référence proposée assure que dans les zones fovéales, l'astigmatisme est sensiblement nul, et donc:

$$4\sqrt{(a'_3 - A_3)^2 + (a'_5 - A_5)^2} = 0$$

ce qui implique

$a'_3 = A_3$ et
$a'_5 = A_5$

De ce fait, l'axe de l'astigmatisme et son module sont égaux à l'axe de l'astigmatisme prescrit et à son module, au moins dans la zone fovéale.

Ces deux relations définissent en fait une lentille cible, qui peut être utilisée pour l'optimisation de lentilles dans un programme d'optimisation, comme expliqué plus bas. Cette lentille cible:

- présente le comportement en puissance de la lentille de référence;
- présente un astigmatisme résiduel égal à l'astigmatisme de la lentille de référence.

Dans l'exemple donné ci-dessus, la lentille de référence présente la même puissance et la même addition que la lentille prescrite. On pourrait aussi choisir comme lentille de référence une lentille de puissance ou d'addition différente de celle prescrite. Dans ce cas, la relation (1) s'écrirait:

$$a'_4 = m + na_4 \qquad (1')$$

avec m et n deux réels choisis de sorte que la puissance en vision de loin et l'addition présentent les valeurs prescrites. Autrement dit, m et n sont les solutions de deux équations à deux inconnues, dans les directions du regard pour lesquelles on connaît la prescription, i.e. en vision de loin et en vision de près.

L'invention propose d'utiliser ces valeurs cibles pour définir des lentilles, par une méthode d'optimisation connue en soi. On notera que l'invention a été décrite ci-dessus dans le cas le plus complexe d'une lentille progressive multifocale; elle s'applique aussi bien pour l'optimisation de verres sphériques, qui correspondent à un cas particulier où

$$4\sqrt{A_3^2 + A_5^2} = 0$$

L'invention s'applique aussi au cas d'un verre unifocal, qui correspond à
$4A_4$ = constante.

Enfin, l'invention utilise avantageusement un programme de tracé de rayons pour la détermination de la surface optimisée, dans des conditions physiologiques; elle permet d'optimiser une face avant de lentille, pour une face arrière donnée, ou le contraire.

On décrit maintenant un procédé d'optimisation qui peut être utilisé pour la mise en oeuvre de l'invention. Le but du procédé d'optimisation, en partant d'une lentille de départ, est de faire varier les paramètres définissant au moins l'une des surfaces d'une lentille courante de sorte à satisfaire aussi bien que possible les contraintes (1) et (2) définies plus haut.

On peut pour cela considérer une fonction de mérite, représentative des écarts entre la lentille à optimiser et la lentille de référence définie comme suit. Pour un ensemble de points de la lentille, ou de directions du regard, indicés par une variable i, on considère la fonction de mérite écrite sous la forme:

$$\sum_i p_i \sum_j w_{ij} \left( V_{ij} - C_{ij} \right)^2$$

où Pi est une pondération du point i;
$V_{ij}$ est la valeur soit de l'astigmatisme résiduel, soit de la puissance au point i, pour la lentille courante;
$C_{ij}$ est la valeur soit de l'astigmatisme de la lentille de référence, soit de la puissance de la lentille de référence;
$W_{ij}$ est la pondération de la différence d'astigmatisme ou de puissance au point i.

On définit donc de cette façon, une cible, et une fonction de mérite représentative des écarts des caractéristiques optiques d'une lentille par rapport à cette cible. Une telle fonction de mérite est évidemment positive et doit être minimisée au cours du processus d'optimisation.

Pour procéder à l'optimisation, il suffit alors de choisir une lentille de départ et une méthode de calcul permettant de faire diminuer par itérations la valeur de la fonction de mérite. On peut avantageusement utiliser comme méthode de calcul une méthode des moindres carrés amortis, ou encore toute autre méthode d'optimisation connue en soi. En utilisant une méthode des moindres carrés amortis, une fonction de mérite du type de celle définie plus haut, il suffit de procéder à une dizaine d'itérations, pour arriver dans la plupart des cas à une lentille présentant de bonnes performances. -

Pour procéder à l'optimisation, on peut avantageusement utiliser pour la lentille à optimiser une décomposition de la surface d'onde sur la pupille de l'oeil, selon les polynômes de Zernike, de sorte à utiliser directement les contraintes sous la forme des relations (1) et (2) mentionnées plus haut. Dans ce cas, on peut partir de la lentille de départ, et ajouter à la surface correspondante une nappe à optimiser, et ne modifier que cette nappe dans le processus d'optimisation, cette nappe pouvant elle-même être modélisée par des polynômes de Zernike.

On donne maintenant un exemple d'optimisation utilisant une telle décomposition sur des polynômes de Zernike. La prescription, comme indiqué plus haut, fournit un triplet ($A_3$, $A_4$, $A_5$); la lentille de référence fournit, dans les directions du regard correspondant aux points i choisis, des triplets ($a_3$, $a_4$, $a_5$)$_i$.

La cible s'écrit alors dans chaque direction du regard, ou pour chaque point i:

$$C_{i1} = 4a_4$$

$$C_{i2} = 4\sqrt{a_3^2 + a_5^2}$$

pour le triplet $(a_3, a_4, a_5)_i$ correspondant

La lentille courante présente dans la direction du regard correspondant au point i une valeur courante de puissance de

$$V_{i1} = 4a'_4$$

et on utilise pour $V_{i2}$ l'astigmatisme résiduel, comme expliqué plus haut:

$$V_{i2} = 4\sqrt{(a'_3 - A_3)^2 + (a'_5 - A'_5)^2}$$

On fait varier les valeurs de $a'_3$, $a'_4$ et $a'_5$ aux différents points i pour faire diminuer la fonction de mérite, comme expliqué plus haut.

Après la fin de l'optimisation, on obtient une carte d'altitude de la surface optimisée, définissant la surface à réaliser.

Les exemples qui suivent donnent plusieurs modes de réalisation de l'invention (exemple, 1 et 3).

Example 1.

Dans cet exemple, on optimise la surface avant d'une lentille, dont la surface arrière est une surface torique du type de celles utilisées selon l'art antérieur, mais qui ne correspond pas nécessairement à la prescription torique du porteur. On cherche à obtenir une lentille multifocale pour la prescription suivante:

- puissance en vision de loin: 3 dioptries;
- astigmatisme: 2 dioptries;
- axe de l'astigmatisme : 135°;
- addition : 2 dioptries;
- indice de réfraction égal à 1,502.

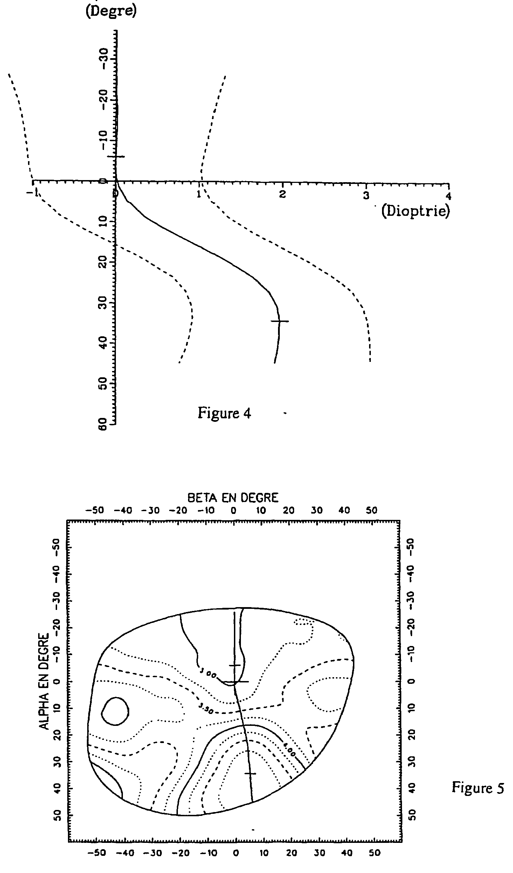

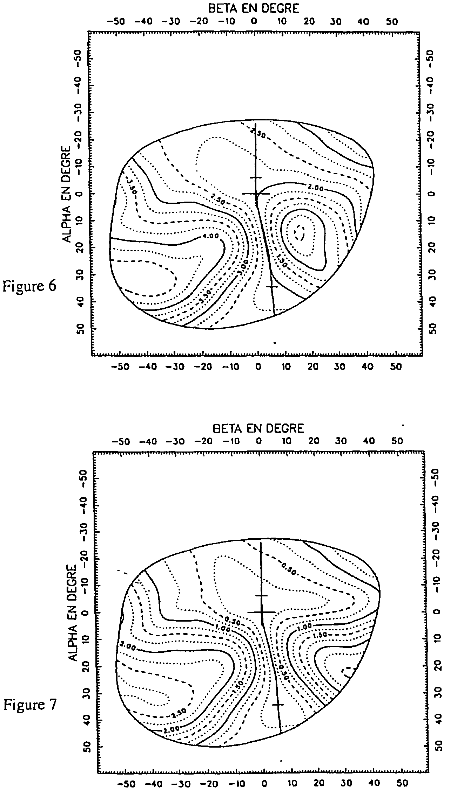

Les figures 4 à 7 montrent des représentations des caractéristiques optiques d'une lentille de l'art antérieur; la figure 4 montre la puissance selon la méridienne, avec la définition de puissance donnée plus haut. Les abscisses sont graduées en dioptries, et les ordonnées donnent la hauteur en degrés sur le verre; le trait plein montre la puissance, et les traits interrompus les quantités 1/JT et 1/JS définiees à la figure 1, pour des distances objets correspondant à un ergorama représentatif des distances des points objets dans chaque direction du regard pour assurer au porteur un confort optimal. La figure 5 est une représentation des lignes d'égale puissance, i. e. des lignes formées des points ayant une valeur de puissance identique. Les axes des abscisses et des ordonnées donnent respectivement les angles β et α. La figure 6 montre, avec les mêmes axes, les lignes d'égal astigmatisme oblique. La figure 7 montre l'astigmatisme résiduel, tel que défini plus haut.

Cette lentille est une lentille de l'art antérieur, dans laquelle la face arrière porte le tore, tandis que la face avant est une surface multifocale progressive telles que celles décrites dans les brevets de la demanderesse. Cette lentille présente une base de 6,20 dioptries, une puissance en vision de loin de 2,97 dioptries, une addition de puissance de 1,97 dioptries, et un astigmatisme de 2,11 dioptries avec un axe de 135°.

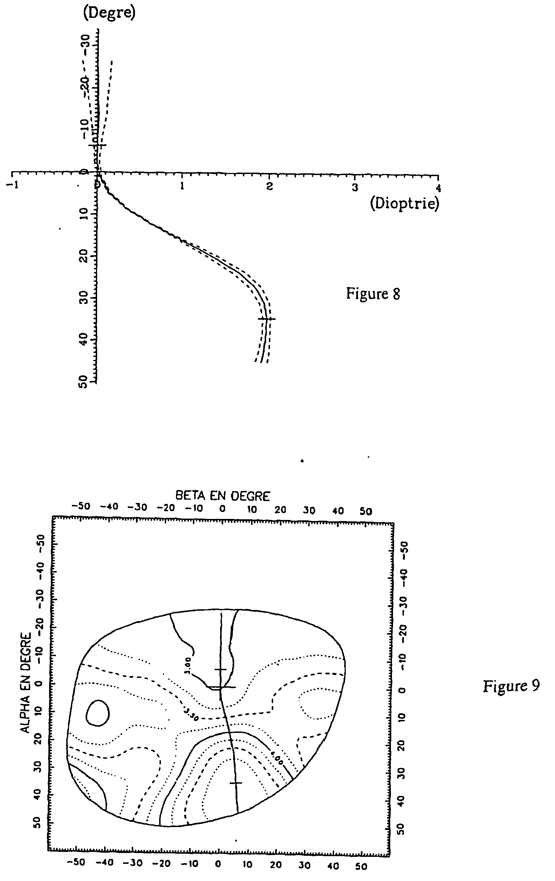

Les figures 8 à 10 montrent des représentations des caractéristiques optiques de la lentille de référence utilisée pour l'optimisation; cette lentille est une lentille sphérique, de même puissance 2,97 dioptries en vision de loin, de même addition 1,98 dioptries, et sans astigmatisme. Les figures 8 à 10 montrent des représentations analogues à celles des figures 4 à 6, avec les mêmes conventions.

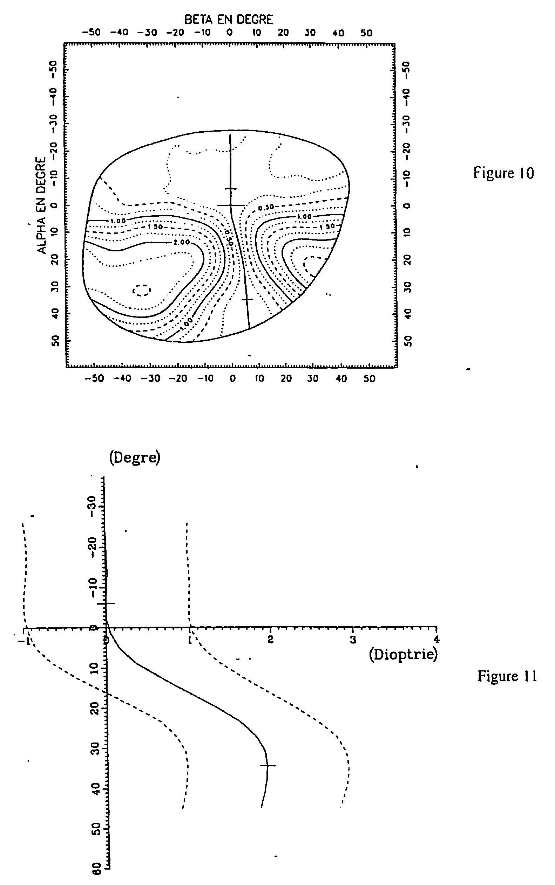

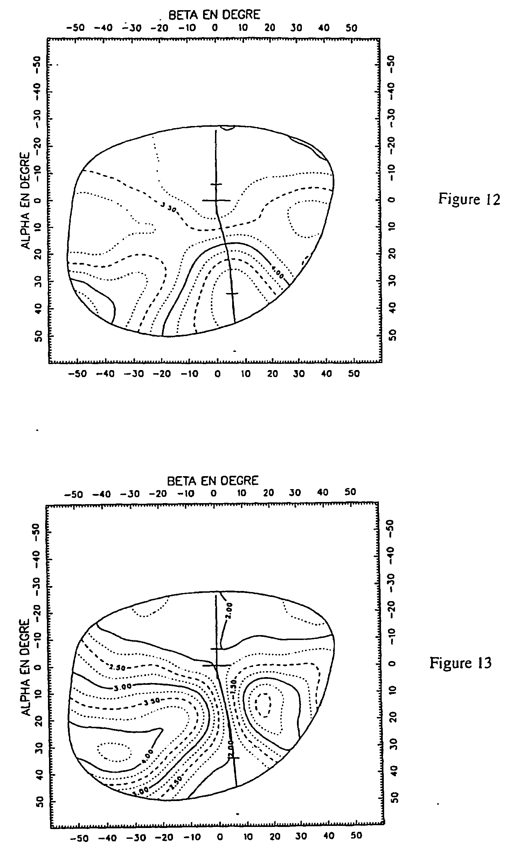

Les figures 11 à 14 montrent des représentations des caractéristiques optiques d'une lentille optimisée selon l'invention; les figures 11 à 14 montrent encore des représentations analogues à celles des figures 4 à 7, avec les mêmes conventions. Comme indiqué ci-dessus, on a optimisé la face avant, en utilisant la lentille de départ de même face avant que la lentille de l'art antérieur, mais avec une surface arrière torique approchée, et la lentille des figures 8 à 10 comme lentille de référence. Les figures montrent que les caractéristiques optiques de la lentille optimisée selon l'invention sont très proches de celles de la lentille de référence. On a ainsi évité les aberrations introduites par la face arrière torique de la lentille de l'art antérieur. La lentille présente une base de 6,63 dioptries, une puissance en vision de loin de 3,02 dioptries, une addition de puissance de 1,94 dioptries, et un astigmatisme de 1,99 dioptries d'axe 135°.

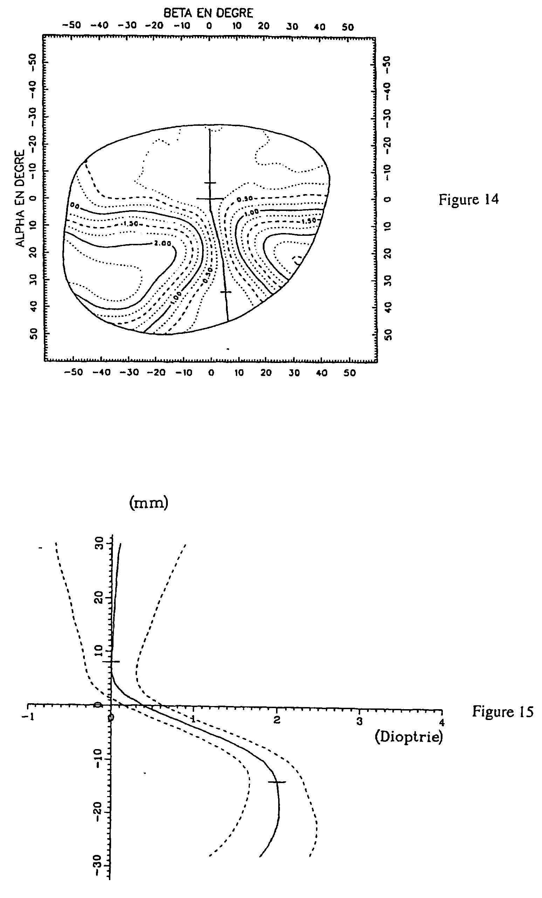

Les figures 15 à 17 montrent des représentations des caractéristiques surfaciques de la face avant de la lentille des figures 11 à 14. La figure 15 montre la puissance surfacique ou sphère moyenne D, telle que définie plus haut: le trait plein donne la sphère moyenne, et les traits interrompus les valeurs $C_1=(n-1)/R_1$ et $C_2=(n-1)/R_2$ avec $R_1$ et $R_2$ les rayons principaux de courbure. Les abscisses sont graduées en dioptries, et les ordonnées donnnent la hauteur sur la face avant, en mm. La sphère moyenne au point de référence de vision de loin est de 6,63 dioptries, pour un cylindre de 0,63 dioptries; la sphère moyenne au point de référence de vision de près est de 8,63 dioptries, pour un cylindre de 0,64 dioptries. On constate de cette seule représentation que l'invention conduit à une répartition du cylindre ou du tore sur les deux faces de la lentille optimisée.

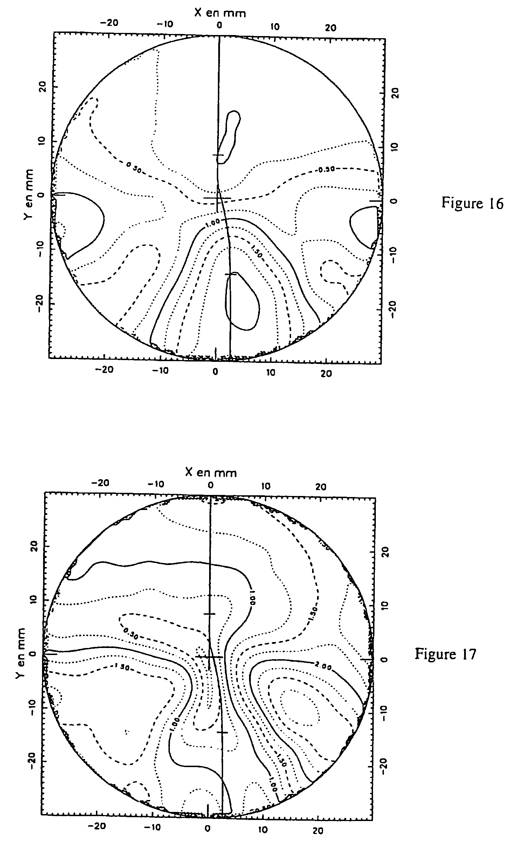

La figure 16 montre les lignes d'isosphère moyenne de la face avant de la lentille; les axes sont gradués en mm; la figure 17 montre les lignes d'isocylindre, avec les mêmes axes. Ces figures montrent que la face avant de la lentille de l'invention est très différente des faces avant des lentilles classiques.

L'invention, telle que mise en oeuvre dans cet exemple, montre les aberrations induites par les procédés de l'art antérieur, et montre comment l'invention, par la prise en compte des données physiologiques du porteur, et grâce à des calculs optiques, permet de réduire ces aberrations. On corrige ainsi les aberrations induites par le tore dans les lentilles de l'art antérieur, et on donne au porteur une vision fovéale équivalente à celle d'un porteur emmétrope de même addition. On montre aussi que la partie torique manquante à la lentille de départ est transférée à la face avant.

Exemple 2. (pas selon l'invention)

Dans cet exemple on optimise la face arrière d'une lentille multifocale progressive, pour laquelle le tore et la dégression se trouvent sur la face arrière de la lentille.

La prescription est la suivante:

- puissance en vision de loin: 3 dioptries;
- astigmatisme: 2 dioptries;
- axe de l'astigmatisme : 45°;
- addition : 2 dioptries;
- indice de réfraction 1,502 dioptries.

La face avant de la lentille est sphérique.

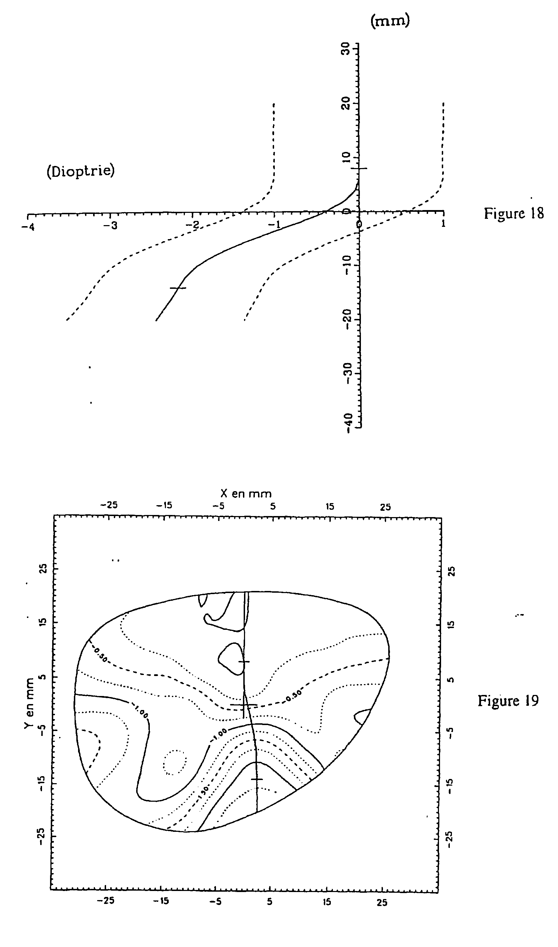

Les figures 18 à 20 montrent, avec les mêmes conventions que les figures 15 à 17, des représentations des caractéristiques surfaciques de la face arrière de la lentille de départ; la face avant est sphérique; la face arrière est calculée de façon approximative par sommation des altitudes d'une surface multifocale progressive classique et d'une surface torique, en tenant compte de la face avant. Plus précisément, on considère les trois surfaces suivantes:

$S_1$ : surface progressive d'addition 2,00 dioptries, et de base 6,20 dioptries;
$S_2$ : sphère de rayon identique au rayon en vision de loin de la surface progressive classique;
$S_3$: surface torique assurant un astigmatisme de 2,00 dioptries et une puissance de 3,00 dioptries pour la face avant considérée.

L'altitude d'un point de la face arrière de départ est donnée par

$$z = -z_1 + z_2 + z_3$$

où $z_1$, $z_2$ et $z_3$ sont les altitudes respectives des trois surfaces $S_1$, $S_2$ et $S_3$; les termes $-z_1 + z_2$ définissent approximativement une surface plane en vision de loin, et dégressive en vision de près; le terme $z_3$ ajoute l'effet torique attendu. On obtient de la sorte une face arrière de sphère moyenne en vision de loin 3,34 dioptries, de dégression 2,18 dioptries. Au point de référence de vision de loin, la face arrière présente un cylindre de 1,99 dioptries, et au point de référence de vision de près, elle présente un cylindre de 2,07 dioptries. La face avant de la lentille présente une surface sphérique de rayon 6,20 dioptries.

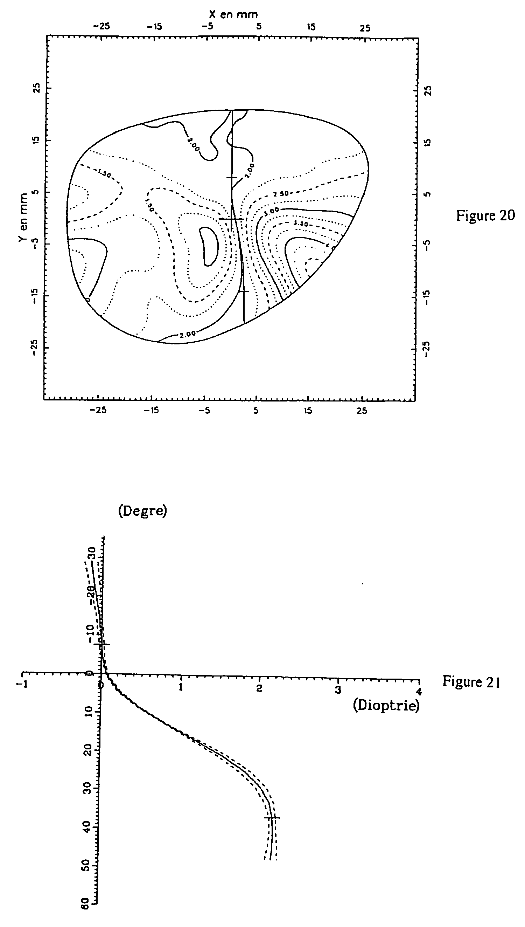

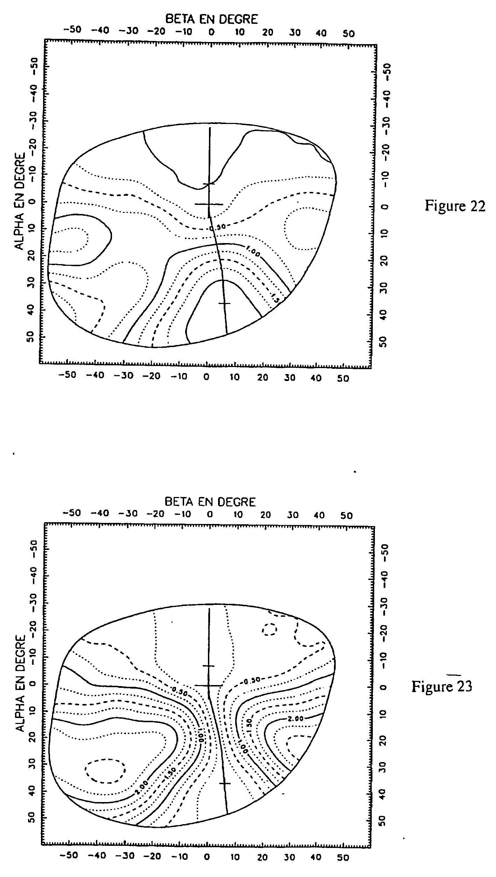

Les figures 21 à 23 montrent, avec les mêmes conventions que les figures 8 à 10, des représentations des caractéristiques optiques de la lentille de référence. On utilise comme lentille de référence une lentille présentant une face avant progressive classique et une face arrière sphérique; la lentille présente une puissance nulle en vision de loin, une addition de puissance de 2,19 dioptries, et une base de 6,20 dioptries, comme indiqué plus haut.

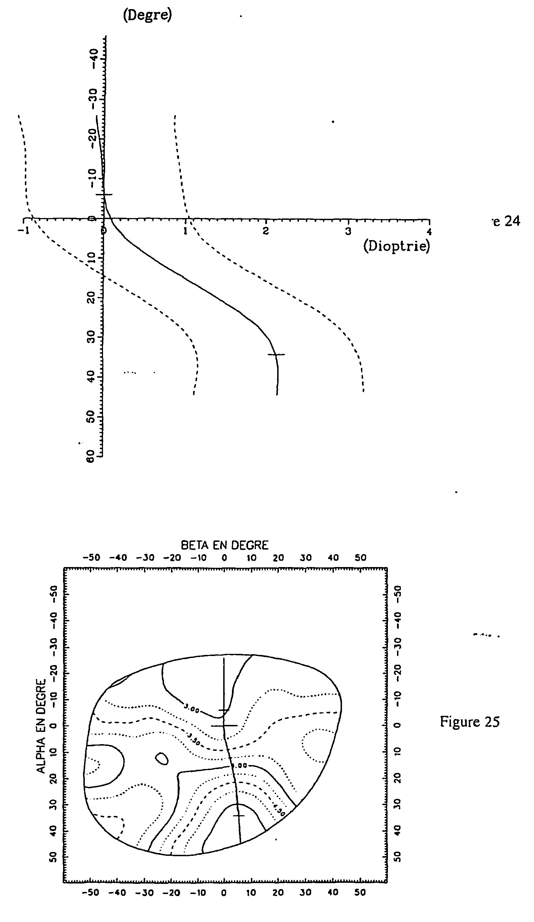

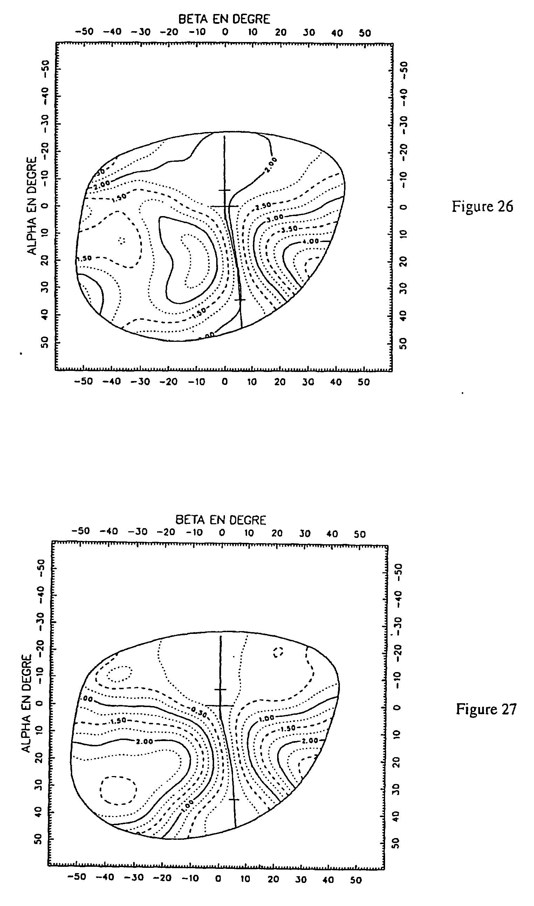

Les figures 24 à 27 montrent des représentations des caractéristiques optiques de la lentille optimisée, avec les mêmes conventions que les figures 11 à 14. La lentille optimisée présente une puissance au point de référence de vision de loin de 2,98 dioptries, un astigmatisme au même point de 1,94 dioptries, une puissance au point de référence de vision de près de 5,12 dioptries, et un astigmatisme au même point de 1,97 dioptries. Cette lentille est obtenue en ajoutant une puissance de trois dioptries à la lentille de référence utilisée.

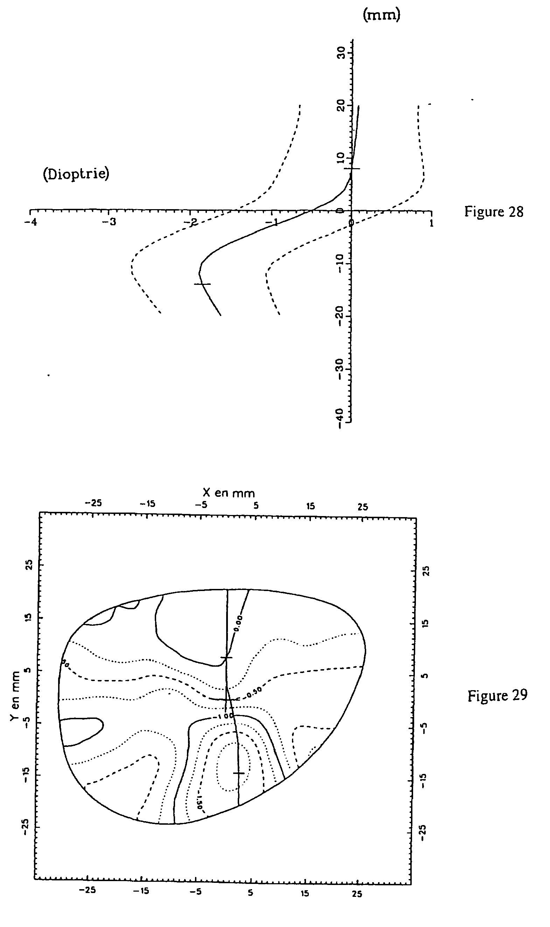

Les figures 28 à 30 montrent des représentations des caractéristiques surfaciques de la face arrière de la lentille optimisée, avec les mêmes conventions que les figures 15 à 17. La face arrière présente au point de contrôle de la vision de loin une sphère moyenne de 3,34 dioptries, et un cylindre de 1,79 dioptries. Au point de référence de vision de près, la face arrière présente une sphère moyenne de 1,49 dioptries, et un cylindre de 1,59 dioptries. La dégression de la face arrière est de 1,85 dioptries.

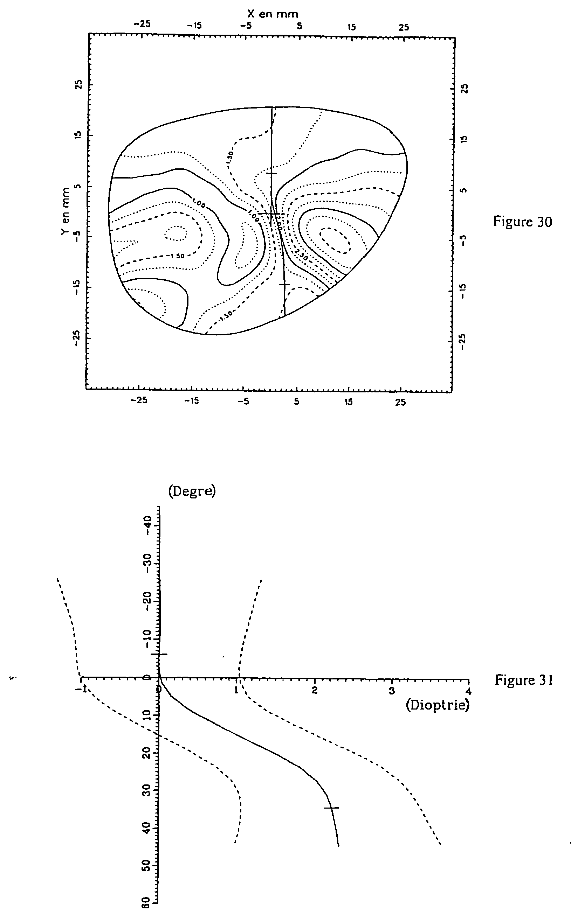

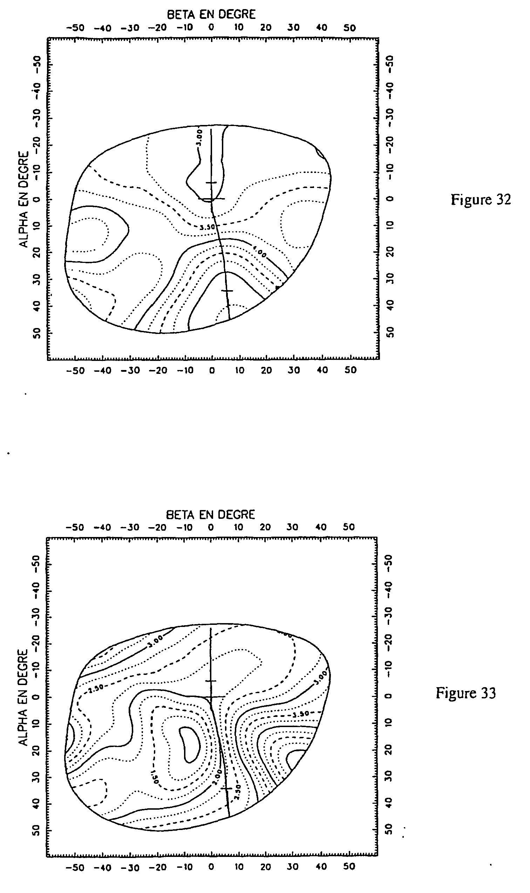

Les figures 31 à 34 montrent à titre de comparaison, des représentations des caractéristiques optiques d'une lentille de l'art antérieur. Les conventions sont les mêmes que celles des figures 24 à 27. On constate de nouveau, comme dans l'exemple de la figure 11, que la lentille optimisée présente des aberrations moindres que celles de la lentille de l'art antérieur. En outre, l'astigmatisme résiduel, tel que perçu par le porteur, est proche de l'astigmatisme de la lentille de référence.

Exemple 3.

Dans cet exemple, on optimise la surface avant d'une lentille unifocale, dont la face arrière comporte un tore classique.

La prescription est la suivante:

- sphère : 0 dioptries;
- cylindre 2,75 dioptries;
- axe du cylindre 90°;
- indice de réfraction 1,604.

La lentille de départ présente une face avant sphérique, dont la base est de 4,58 dioptries.La face arrière est celle qui correspond à la prescription selon l'art antérieur.

Dans ce cas très simple, les cibles d'astigmatisme résultant sont supposées nulles et les cibles de puissance sont toutes identiques et égales à 1,375 dioptries.

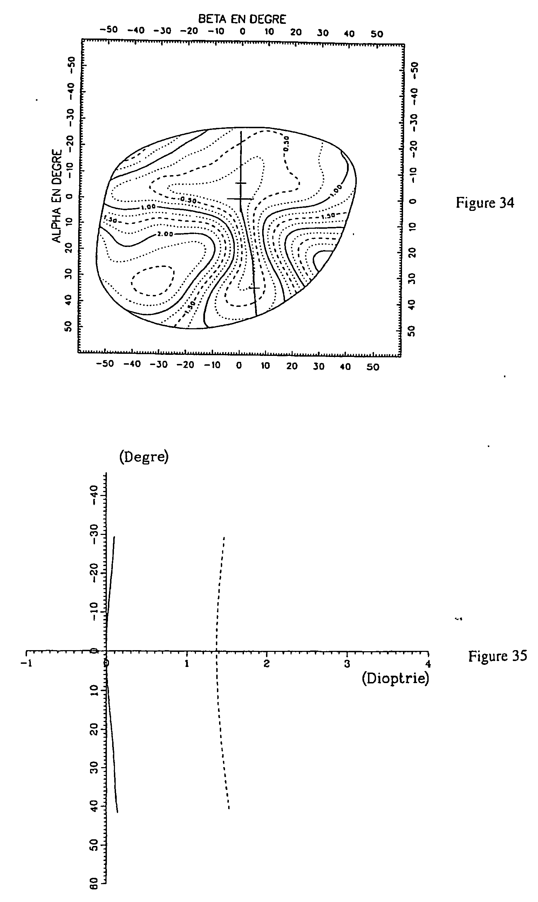

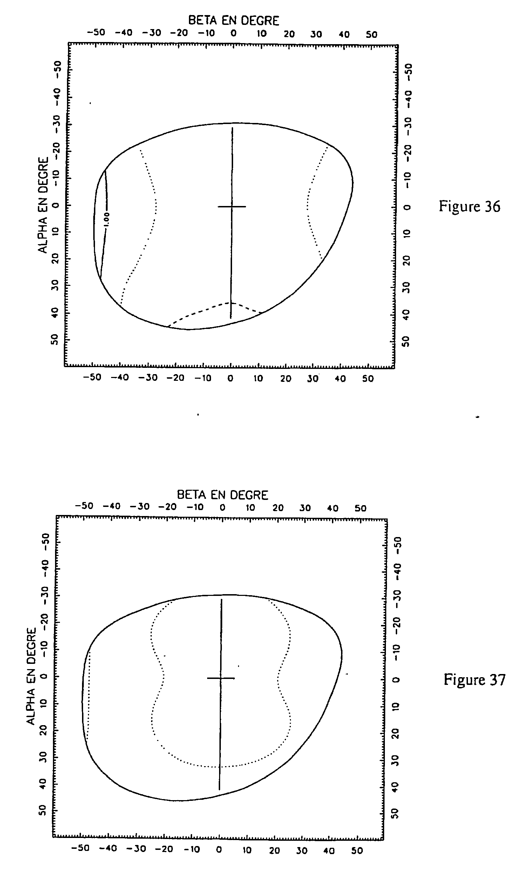

Les figures 35 à 38 montrent, avec les mêmes conventions que les figures 4 à 7, les caractéristiques optiques de la lentille optimisée selon l'invention. Au point de contrôle, la puissance est de 1,39 dioptries, et l'astigmatisme de 2,74 dioptries.

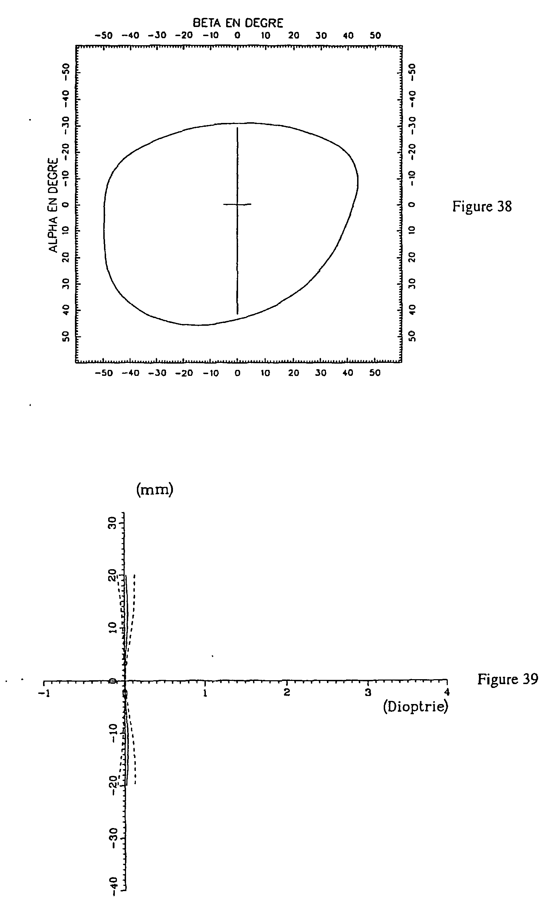

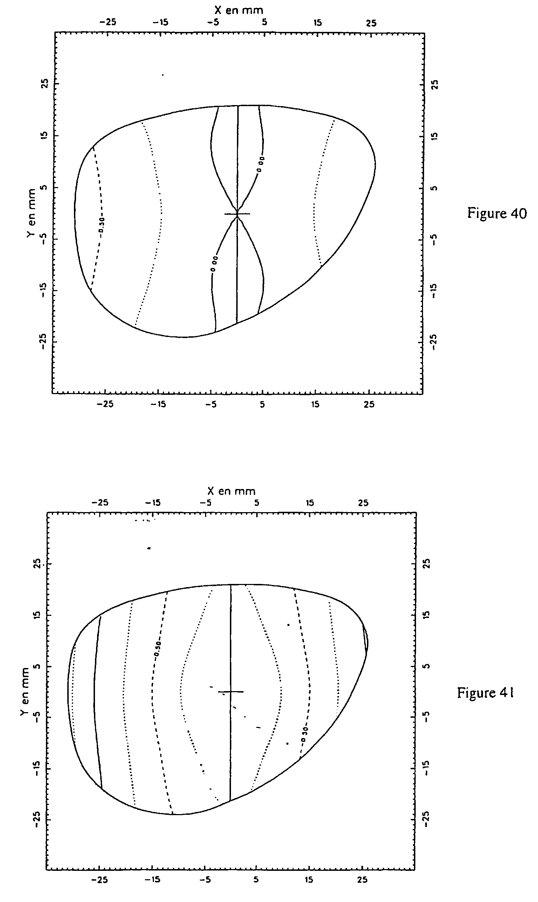

Les figures 39 à 41 montrent, avec les mêmes conventions que les figures 28 à 30, des représentations des caractéristiques surfaciques de la face avant de la lentille unifocale optimisée. La sphère moyenne au point de contrôle est de 4,58 dioptries, et le cylindre de 0,02 dioptries.

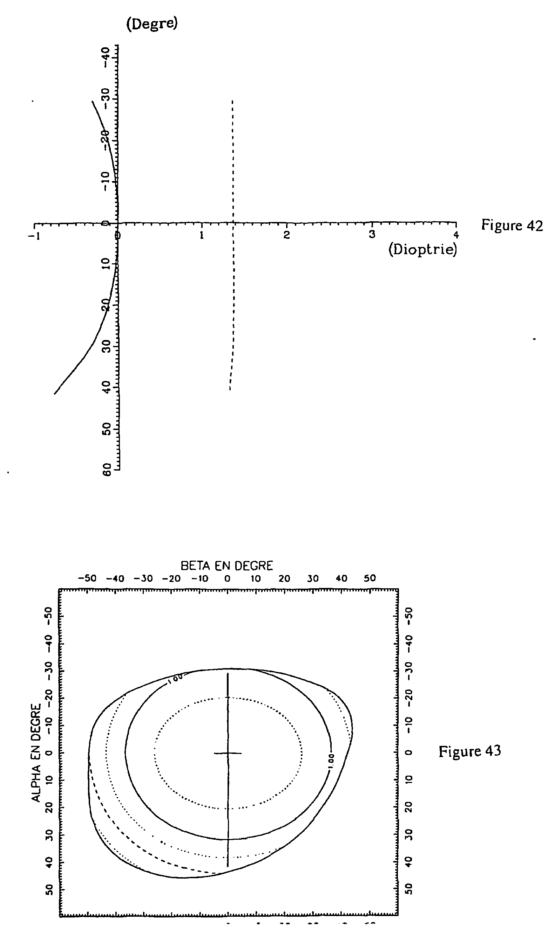

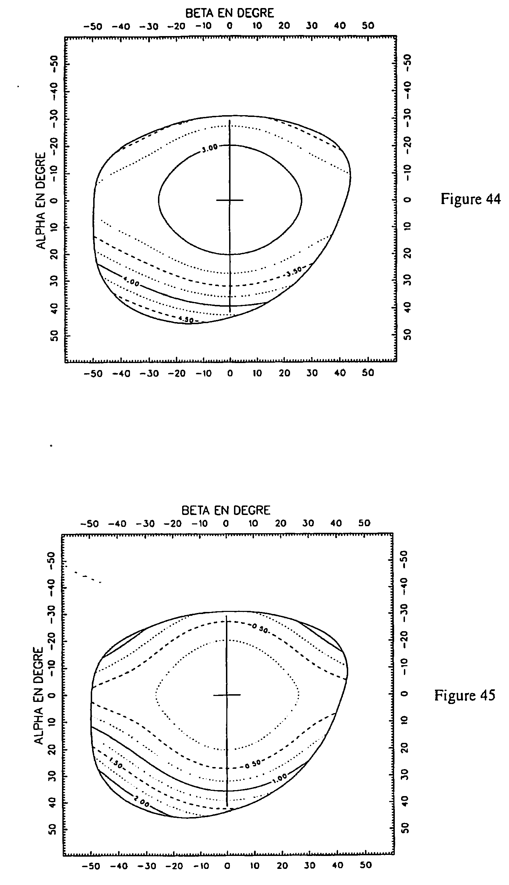

A titre de comparaison, les figures 42 à 45 montrent des représentations des caractéristiques optiques d'une lentille asphérique de l'art antérieur pour la même prescription. Les conventions de représentation sont les mêmes que celles des figures 35 à 38.

On constate de nouveau que l'invention permet de réduire les aberrations, et d'obtenir une lentille pour laquelle l'astigmatisme résiduel perçu par le porteur est sensiblement nul.

L'invention permet, pour des lentilles multifocales ou unifocales, d'obtenir des caractéristiques optiques similaires à celles des meilleures lentilles de l'art antérieur, et ce malgré la prescription d'un astigmatisme. Le procédé de l'invention assure des résultats meilleurs que la solution proposée dans le WO-A-9719382: en effet, il permet de prendre en compte les propriétés optiques de la lentille, telle que le porteur la perçoit effectivement, et non pas seulement un calcul algébrique nécessairement approximatif.

Il est clair que dans tous ces exemples, on peut échanger facilement le rôle des surfaces avant et arrière. On peut aussi répartir indifféremment la puissance, le tore et la progression sur l'une ou l'autre des deux surfaces de la lentille, ou partiellement sur une surface et l'autre. Dans le cas de lentilles progressives, on peut utiliser comme cible une lentille plane de même addition, comme dans l'exemple 1; on pourrait aussi bien utiliser une lentille progressive présentant une puissance équivalente à la puissance prescrite.

Bien entendu, il est possible d'utiliser d'autres méthodes d'optimisation, et d'autres représentations des surfaces que la méthode proposée et que les représentations en termes de surfaces d'ondes décomposées sur des polynômes de Zernike.

**Revendications**

1. Procédé de détermination par optimisation et d'obtention d'une lentille ophtalmique pour un porteur avec une prescription en puissance, en astigmatisme, et le cas échant en addition, comprenant les étapes de:

   - choix d'une lentille de départ et définition d'une lentille courante égale à la lentille de départ ;
   - choix d'une lentille de référence adaptée à un porteur sans prescription d'astigmatisme présentant une puissance et le cas échéant une addition identiques à celles prescrites ;
   - modification de la lentille courante, de sorte à minimiser dans une pluralité de directions du regard et dans un repère lié à l'oeil :

      ◦ la différence entre la puissance de la lentille courante et la puissance de la lentille de référence ;
      ◦ la différence entre l'astigmatisme résiduel et l'astigmatisme de la lentille de référence ;

   l'astigmatisme résiduel étant défini comme l'écart entre l'astigmatisme prescrit et l'astigmatisme généré par la lentille courante à la fois en amplitude et en axe dans le repère lié à l'oeil et pour chaque direction du regard.

2. Procédé selon la revendication 1, dans lequel la puissance, l'astigmatisme et l'astigmatisme résiduel sont calculés par tracé de rayons.

3. Procédé selon la revendication 1 ou 2, dans lequel l'astigmatisme prescrit est représenté par sa décomposition ($A_3$, $A_4$, $A_5$) sur des polynômes de Zernike, et dans lequel, dans chaque direction du regard, la surface d'onde générée par la lentille courante est représentée par sa décomposition ($a'_3$, $a'_4$, $a'_5$) sur des polynômes de Zernike, et en ce que l'amplitude de l'astigmatisme résiduel dans la dite direction du regard est égale à

$$4\sqrt{\left(a'_3 - A_3\right)^2 + \left(a'_5 - A_5\right)^2}.$$

4. Procédé selon la revendication 1, 2 ou 3, dans lequel dans chaque direction du regard, la surface d'onde générée par la lentille courante est représentée par sa décomposition ($a'_3$, $a'_4$, $a'_5$) sur des polynômes de Zernike, et en ce que la puissance dans la dite direction du regard est égale à $4a'_4$.

5. Procédé selon l'une des revendications 1 à 4, dans lequel la lentille ophtalmique est une lentille progressive.

6. Procédé selon l'une des revendications 1 à 5, dans lequel la lentille ophtalmique est une lentille dédiée à la vision de près.

7. Procédé selon l'une des revendications 1 à 6, dans lequel l'orientation du repère lié à l'oeil dans une direction du regard ($\alpha$, $\beta$) est déduite de celle du repère dans la direction $\alpha = \beta = 0$ au moyen de la loi de Listing.

8. Procédé selon l'une des revendications 1 à 7, dans lequel la lentille de référence est une lentille sphérique.

9. Procédé selon l'une des revendications 1 à 8, dans lequel l'étape de modification est itérée de sorte à faire décroître les dites différences.

10. Procédé selon l'une des revendications 1 à 9, dans lequel l'étape de modification comprend la modification d'une seule des surfaces de la lentille courante.

**Patentansprüche**

1. Verfahren zum Bestimmen durch Optimieren und Erzielung einer ophthalmischen Linse für einen Träger, mit einer Verschreibung in Stärke, in Astigmatismus, und gegebenenfalls in Addition mit den folgenden Schritten:

   - Auswahl einer Ausgangslinse und Definition einer geläufigen Linse gleich der Ausgangslinse,
   - Auswahl einer Referenzlinse, die an einen Träger ohne Astigmatismusverschreibung angepasst ist, und die identische Stärke und gegebenenfalls die identische Addition wie die verschriebene hat;

- Andern der geläufigen Linse derart, dass in mehrere Richtungen des Blicks und in einer Markierung verbunden mit dem Auge:

- der Unterschied zwischen der Stärke der geläufigen Linse und der Stärke der Referenz- Linse,
- der Unterschied zwischen dem Restastigmatismus und dem Astigmatismus der Referenzlinse minimiert wird,

wobei der Restastigmatismus als der Unterschied zwischen dem verschriebenen Astigmatismus und dem Astigmatismus definiert wird, der von der geläufigen Linse sowohl in die Amplitude als auch in die Achse in der mit dem Auge verbundenen Markierung und für jede Blickrichtung erzeugt wird.

2. Verfahren nach Anspruch 1, bei dem die Starke, der Astigmatismus und der restliche Astigmatismus durch Strahlenverlauf berechnet werden.

3. Verfahren nach Anspruch 1 oder 2, bei dem der verschriebene Astigmatismus durch seine Aufschlüsselung ($A_3$, $A_4$, $A_5$) auf Zernike-Polynomen dargestellt wird und bei dem in jede Blickrichtung die Wellenfläche, die von der geläufigen Linse erzeugt wird, durch ihre Aufschlüsselungen ($a'_3$, $a'_4$, $a'_5$) auf Zernike-Polynomen dargestellt wird, und dass die Amplitudedes Restastigmatismus in die Richtung des Blicks gleich

$$\sqrt[4]{(a'_3 - A_3)^2 + (a'_5 - A_5)^2} \text{ ist.}$$

4. Verfahren nach Anspruch 1, 2 oder 3, bei dem in jede Blickrichtung die von der geläufigen Linse erzeugte Wellenflache durch ihre Aufschlüsselung ($a'_3$, $a'_4$, $a'_5$) auf Zernike-Polynomen dargestellt ist, und dass die Starke in die Blickrichtung gleich $4a'_4$ ist.

5. Verfahren nach einem der Anspruche 1 bis 4, bei dem die ophthalmische Linse eine Progressivlinse ist.

6. Verfahren nach einem der Anspruche 1 bis 5, bei dem die ophthalmische Linse eine Nahsichtlinse ist.

7. Verfahren nach einem der Anspruche 1 bis 6, bei dem die Ausrichtung der mit dem Auge verbundenen Markierung in eine Blickrichtung $(\alpha, \beta)$ von der der Markierung in die Richtung $\alpha = \beta = 0$ mittels des Listing-Gesetzes abgeleitet wird.

8. Verfahren nach einem der Anspruche 1 bis 7, bei dem die Referenzlinse eine spharische Linse ist.

9. Verfahren nach einem der Anspruche 1 bis 8, bei dem der Änderungsschritt derart wiederholt wird, dass die Unterschiede sinken.

10. Verfahren nach einem der Anspruche 1 bis 9, bei dem der Änderungsschritt das Andern einer einzigen der Flachen der geläufigen Linse aufweist.

**Claims**

1. A method for determining, by optimization, and for obtaining an ophthtalmic lens for a spectacle wearer with a prescription in power, in astigmatism, and if so in addition, comprising the steps of;

- selecting a starting lens and defining a working lens to be equal to the starting lens;
- selecting a target lens suitable for a spectacle wearer for whom no astigmatism has been prescribed, which has a power, and if so an addition identical to those prescribed ;
- modifying the working lens, in order to minimize, in a plurality of directions of glance and in a reference frame associated with the eye:

- a difference between power of said working lens and power of the said target lens;
- a difference between residual astigmatism and astigmatism of the target lens;

residual astigmatism being defined as the difference between an astigmatism prescribed and astigmatism generated

EP 0 990 939 B2

by the working lens both as regards amplitude and the axis thereof in the reference frame associated with the eye, and for each direction of glance.

2. The method according to claim 1, in which power, astigmatism and residual astigmatism are calculated by ray tracing.

3. The method according to claim 1 or 2, wherein prescribed astigmatism is represented by expansion ($A_3$, $A_4$, $A_5$) thereof into Zernike polynomials, and in which, in each direction of glance, the wave surface generated by the working lens is represented by the expansion ($a'_3$ $a'_4$, $a'_5$) thereof into Zernike polynomials, and wherein amplitude of residual astigmatism in said direction of glance is equal to

$$\sqrt[4]{(a'_3 - A_3)^2 + (a'_5 - A_5)^2}$$

4. The method according to claim 1, 2 or 3, wherein, in each direction of glance, a wave surface generated by said working lens is represented by expansion ($a'_3$ $a'_4$, $a'_5$) thereof into Zernike polynomials, and wherein power in said direction of glance is equal to $4a'_4$.

5. The method according to one of claims 1 to 4, wherein said ophthalmic lens is a progressive lens.

6. The method according to one of claims 1 to 5, wherein said ophthalmic lens is a lens dedicated to near vision.

7. The method according to one of claims 1 to 6, in which an orientation of the reference frame associated with the eye in a direction of glance ($\alpha$, $\beta$) is deduced from orientation of the reference frame in the direction $\alpha=\beta=O$ by means of Listing's law.

8. The method according to one of claims 1 to 7, wherein the said target lens is a spherical lens.

9. The method according to one of claims 1 to 8, wherein the said step of modifying the working lens is iterated in order to cause said differences to decrease.

10. The method according to one of claims 1 to 9, wherein the step of modifying the working lens comprises modifying one single surface thereof.

13

Figure 1

Figure 2

Figure 3

(Degre)

(Dioptrie)

Figure 4

BETA EN DEGRE

ALPHA EN DEGRE

Figure 5

Figure 6

Figure 7

(Degre)

(Dioptrie)

Figure 8

BETA EN DEGRE

Figure 9

BETA EN DEGRE

Figure 10

(Degre)

(Dioptrie)

Figure 11

BETA EN DEGRE

Figure 12

BETA EN DEGRE

Figure 13

Figure 14

Figure 15

Figure 16

Figure 17

21

(mm)

(Dioptrie)

Figure 18

X en mm

Y en mm

Figure 19

Figure 20

Figure 21

Figure 22

Figure 23

(Degre)

'e 24

(Dioptrie)

BETA EN DEGRE

ALPHA EN DEGRE

Figure 25

Figure 26

Figure 27

Figure 28

Figure 29

Figure 30

Figure 31

BETA EN DEGRE

Figure 32

BETA EN DEGRE

Figure 33

BETA EN DEGRE

Figure 34

(Degre)

(Dioptrie)

Figure 35

Figure 36

Figure 37

BETA EN DEGRE

Figure 38

(mm)

(Dioptrie)

Figure 39

Figure 40

Figure 41

(Degre)

Figure 42

(Dioptrie)

BETA EN DEGRE

Figure 43

BETA EN DEGRE

Figure 44

Figure 45

## RÉFÉRENCES CITÉES DANS LA DESCRIPTION

**Documents brevets cités dans la description**

- FR 2699294 A
- US 5270745 A
- US 5272495 A
- FR 2683642 A
- FR 2704327 A
- FR 2588973 A
- US 5444503 A
- WO 9613748 A
- WO 9719382 A
- FR 2753805 A
- FR 2683643 A